# EUROPEAN PATENT APPLICATION

(11) **EP 4 848 434 A1**
(43) Date of publication of application: **02.12.2026**
(21) Application number: 25803882.7
(22) Date of filing: 24.03.2025
(51) Int. Cl.: H01M 50/244, H01M 50/204

(54) **BATTERY MODULE AND BATTERY PACK INCLUDING SAME**

(30) Priority: 17.05.2024 KR 20240064226
(71) Applicant: LG Energy Solution, Ltd., Seoul 07335 (KR)
(72) Inventor: JANG, Cheol Han, Daejeon 34122 (KR); KIM, Hyun Jung, Daejeon 34122 (KR)
(74) Representative: Plasseraud IP
(86) International application number: PCT/KR2025/003715
(87) International publication number: WO 2025/239524

(57) **Abstract**

A battery module according to certain aspects of the present disclosure comprises a battery cell stack in which a plurality of battery cells including electrode leads are stacked; and a module frame in which the battery cell stack is housed, wherein the module frame comprises a first module frame; and a second module frame. The first module frame comprises a first main part corresponding to one side surface of the battery cell stack; a first upper part extending along the direction in which the battery cells are stacked at an upper side of the first main part; and a first lower part extending along the direction in which the battery cells are stacked at a lower side of the first main part, and the second module frame comprises a second main part corresponding to the other side surface of the battery cell stack; a second upper part extending along the direction in which the battery cells are stacked at an upper side of the second main part; and a second lower part extending along the direction in which the battery cells are stacked at a lower side of the second main part. The first upper part and the first lower part are formed with a first sawtooth part having a sawtooth shape, and the second upper part and the second lower part are formed with a second sawtooth part having a sawtooth shape.

## Description

### [TECHNICAL FIELD]

### Cross-Reference to Related Application(s)

This application claims priority to and the benefit of Korean Patent Application no. KR10-2024-0064226, filed on May 17, 2024, with the Korean Intellectual Property Office, the disclosure of which is hereby incorporated by reference in its entirety

The present disclosure relates to a battery module and a battery pack including the same, and more particularly, to a battery module having improved battery performance and a battery pack including the same.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, secondary batteries capable of charging and discharging are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which hermetically seals and houses the electrode assembly together with an electrolyte solution.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or more battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

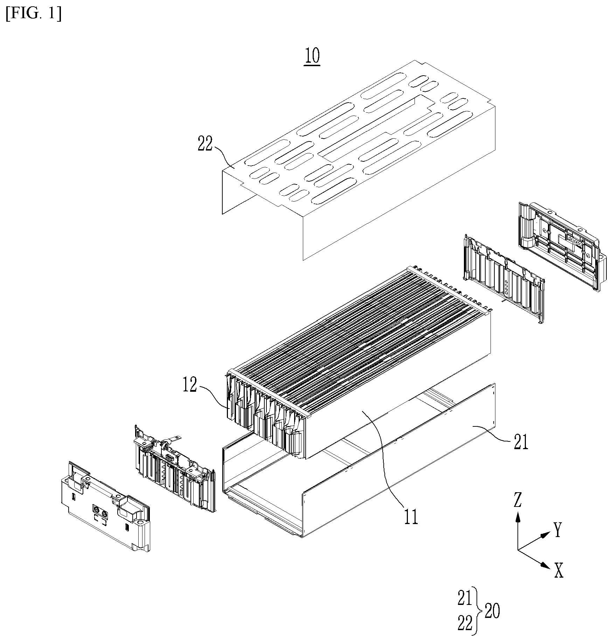

FIG. 1 is an exploded perspective view showing a conventional battery module.

Referring to FIG. 1, a conventional battery module 10 includes a module frame 20 that houses a battery cell stack 12 formed by stacking a plurality of battery cells 11. The module frame 20 may include a U-shaped frame 21 of which an upper surface, a front surface, and a rear surface are opened, and a top plate 22 that covers the upper part of the battery cell stack 12. Further, the module frame may be replaced with a frame of other shape, such as a mono-frame that surrounds the battery cell stack 12 except for the front and rear surfaces.

Conventionally, a module frame 20 has a structure that comes into surface contact with the battery cell stack 12 without pressing the stack. However, particularly in the case of an all-solid-state battery cell or a lithium-sulfur battery cell, under the condition that the surface of the battery cell is pressed, the battery cell operates normally and the speed at which the battery cell life degrades may be slowed down. Therefore, there is a need to introduce a module frame capable of pressing an outer shell of the battery cell stack.

### [DETAILED DESCRIPTION OF THE INVENTION]

### [Technical Problem]

It is an object of the present disclosure to provide a battery module that improves battery performance, and specifically, improves battery performance and prevents degradation of battery life through the surface-pressing of a battery cell.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery module comprising a battery cell stack in which a plurality of battery cells including electrode leads are stacked; and a module frame in which the battery cell stack is housed, wherein the module frame comprises a first module frame; and a second module frame. The first module frame comprises a first main part corresponding to one side surface of the battery cell stack; a first upper part extending along a direction in which the battery cells are stacked at an upper side of the first main part; and a first lower part extending along the direction in which the battery cells are stacked at a lower side of the first main part, and the second module frame comprises a second main part corresponding to the other side surface of the battery cell stack; a second upper part extending along the direction in which the battery cells are stacked at an upper side of the second main part; and a second lower part extending along the direction in which the battery cells are stacked at a lower side of the second main part. The first upper part and the first lower part are formed with a first sawtooth part having a sawtooth shape, and the second upper part and the second lower part are formed with a second sawtooth part having a sawtooth shape.

One surface of the first main part and one surface of the second main part may be located so as to be in parallel with one surface of the battery cells.

The main part may perform surface-pressing of the battery cells.

The first sawtooth part and the second sawtooth part may be meshed with each other.

The first module frame and the second module frame may be restrained from moving in the direction in which the battery cells are stacked.

The first module frame and the second module frame may be restrained from moving in the up-and-down direction, which is a direction between the first upper part and the first lower part or a direction between the second upper part and the second lower part.

The first sawtooth part may be protruded so that an angle formed between the first sawtooth part and an imaginary horizontal line parallel to the first upper part or the first lower part is an acute angle in a direction opposite to a direction in which the first upper part or the first lower part extends from the first main part, and the second sawtooth part may be protruded so that an angle formed between the second sawtooth part and an imaginary horizontal line parallel to the second upper part or the second lower part is an acute angle in a direction opposite to a direction in which the second upper part or the second lower part extends from the second main part.

The acute angle formed by the first sawtooth part and the acute angle formed by the second sawtooth part may be 45 degrees or more and 85 degrees or less.

The acute angle formed by the first sawtooth part and the acute angle formed by the second sawtooth part may be 55 degrees or more and 80 degrees or less.

The first sawtooth part and the second sawtooth part may be coated with an adhesive.

The first module frame and the second module frame may be restrained by the adhesive from moving in a direction in which the electrode leads protrude.

A thickness of the first main part may be larger than a thickness of the first upper part and a thickness of the first lower part, and a thickness of the second main part may be larger than a thickness of the second upper part and a thickness of the second lower part.

A thickness of the first main part and the second main part may be 1.5 mm or more and 30.0 mm or less.

A thickness of the first upper part, the first lower part, the second upper part and the second lower part may be 1.5 mm or more and 6.0 mm or less.

A thickness of the first main part or a thickness of the second main part may be not less than 1 time and not more than 5 times a thickness of the first upper part, a thickness of the first lower part, a thickness of the second upper part or a thickness of the second lower part.

According to certain other aspects of the present disclosure, there is provided a battery pack comprising the above-mentioned battery module.

### [Advantageous Effects]

According to certain embodiments of the present disclosure, by introducing a module frame that houses the battery cells by the surface-pressing, it is possible to improve battery performance and prevent degradation of a battery life.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is an exploded perspective view showing a conventional battery module.
FIG. 2 is an exploded perspective view showing a battery module according to an embodiment of the present disclosure.
FIG. 3 is an exploded plan view showing a module frame and a battery cell stack according to an embodiment of the present disclosure.
FIG. 4 is a plan view showing a state in which the module frame of FIG. 3 is combined.
FIG. 5 is a partially enlarged diagram showing a portion "A" of FIG. 4.
FIG. 6 is a partially enlarged diagram showing a portion "B" of FIG. 5.
FIG. 7 is a partial diagram showing a module frame according to another embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

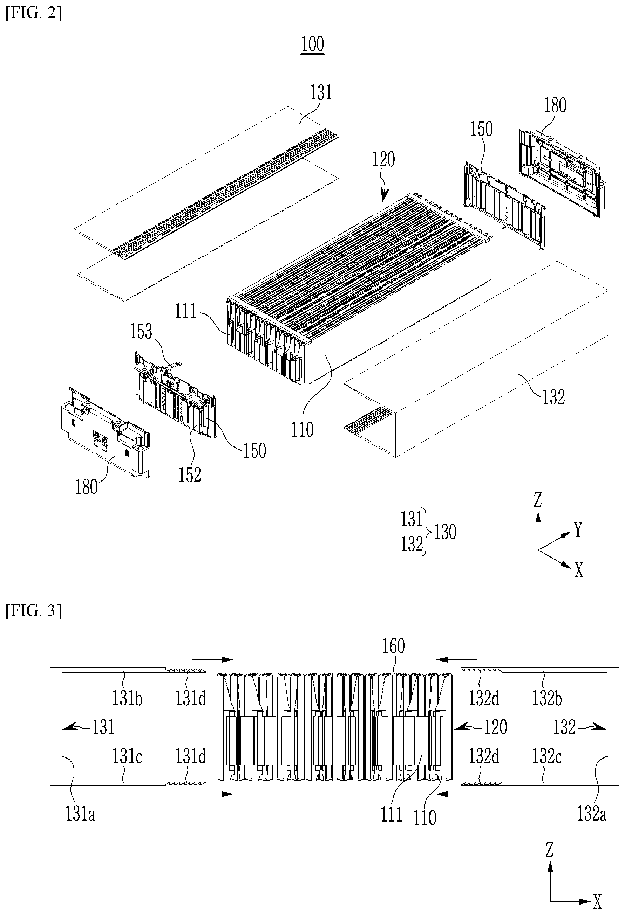

FIG. 2 is an exploded perspective view showing a battery module 100 according to an embodiment of the present disclosure. FIG. 3 is an exploded plan view showing a module frame and a battery cell stack according to an embodiment of the present disclosure.

Referring to FIGS. 2 and 3, a battery module 100 according to an embodiment of the present disclosure includes a battery cell stack 120 in which a plurality of battery cells 110 including electrode leads are stacked; and a module frame 130 in which the battery cell stack 120 is housed, wherein the module frame 130 comprises a first module frame 131; and a second module frame 132.

First, the battery cell 110 may be a pouch-type battery cell 110. Such a pouch-type battery cell 110 may be formed by housing an electrode assembly in a pouch case made of a laminate sheet including a resin layer and a metal layer, and then thermally fusing the sealing part of the pouch case. In this case, the battery cell 110 may be formed in a rectangular sheet structure.

In the battery cell stack 120, a plurality of battery cells 110 may be stacked in one direction. In particular, as shown in FIG. 2, a plurality of battery cells 110 may be stacked along a direction parallel to the X-axis while standing upright so that one-side surfaces of the cell main body face each other. That is, in the battery cell stack 120, one surface of the battery main body of the battery cell 110 may be arranged in parallel to one surface of the first main part 131a of the first module frame 131 or one surface of the second main part 132a of the second module frame 132, which will be described later.

Thus, the electrode leads 111 may protrude in a direction perpendicular to the direction in which the battery cells 110 are stacked. For example, in the battery cell 110, one electrode lead 111 may protrude toward the Y-axis direction, and the other electrode lead 111 may protrude toward the -Y-axis direction.

The battery module 100 according to this embodiment may include a module frame 130 that houses a battery cell stack 120, and end plates 180 that cover a front surface and a rear surface of the battery cell stack 120, respectively. Here, the front surface and the rear surface of the battery cell stack 120 may be both surfaces of the battery cell stack 120 along the direction in which the electrode leads 111 protrude from the battery cells 110. In other words, the battery module 100 according to this embodiment includes a module frame 130 in which the battery cell stack 120 is housed, and one surface is opened in the direction in which the electrode leads 111 protrude from the battery cell stack 120, and an end plate 180 that covers opened one surface of the module frame 130. Further, as shown in FIG. 2, the module frame 130 may be opened in both the Y-axis direction and the -Y-axis direction, which are the directions in which the electrode lead 111 protrudes, and two end plates 180 may cover the open both directions of the module frame 130, respectively.

As described above, the end plates 180 may cover the opened one side of the module frame 130. The end plates 180 can be located on a front surface and a rear surface of the battery cell stack 120. The end plates 180 may be formed on the outer shell of the busbar frame assembly 150 on the basis of the battery cell stack 120, and may be formed to cover the battery cell stack 120 and the busbar frame assembly 150. The end plate 180 can protect the busbar frame assembly 150 and various electrical components connected thereto from external impact, and can have a mounting structure for the battery module 100. The end plate 180 can be joined to the module frame 130 through welding.

According to this embodiment, the busbar frame assemblies 150 may be formed such that they are located on the opened first side (Y-axis direction of FIG. 2) and second side (-Y-axis direction of FIG. 2) of the module frame 130 to cover the battery cell stack 120. The busbar frame assemblies 150 may electrically connect the battery cells 110 constituting the battery cell stack 120 in series or in parallel.

According to this embodiment, the electrode leads 111 connected to the electrode assembly protrude outside the pouch case, wherein the electrode leads 111 of each battery cell may be electrically connected to each other via a busbar 152. The busbar 152 has a structure for guiding the electrical connection of the battery module 100, and is satisfactory if it includes a metal material having excellent electrical conductivity, and the shape or material thereof is not limited.

According to this embodiment, the printed circuit board 153 is configured to sense voltage data or thermal data of the battery cells 110. Thereby, it is possible to sense the voltage data of each battery cell 110 and transmit it to the outside.

The busbar 152 and the printed circuit board 153 may be included in the busbar frame assembly 150. In one embodiment, the busbar 152 and the printed circuit board 153 may be mounted on a busbar frame included in the busbar frame assembly 150.

The module frame 130 may be for protecting the battery cell stack 120 and electrical components connected thereto from external physical impacts. The module frame 130 may house the battery cell stack 120 and electrical components connected thereto in the internal space of the module frame 130.

Referring to FIG. 3, a plurality of flame retardant pads 160 may be interposed between the battery cells 110. As shown in FIG. 3, a plurality of flame retardant pads 160 may be inserted one by one each time three to four battery cells 110 are stacked, so that the plurality of flame retardant pads 160 may be arranged at equal intervals. Further, a plurality of flame retardant pads 160 may be arranged at different intervals from each other. The arrangement of the flame retardant pads 160 is not particularly limited, and the number and thickness thereof may be appropriately adjusted as necessary. In this way, the flame retardant pads 160 may be separately arranged at the equal intervals or unequal intervals, thereby increasing thermal impedance when a thermal runaway occurs in the battery cells 110 inside the battery module 100, and preventing or delaying heat transfer between adjacent battery cells 110. Further, a flame retardant pad 160 may also be arranged between the battery cell 110 stacked at the outermost shell of the battery cell stack 120 and the side wall of the module frame 130. The flame retardant pad 160 may delay or block the transfer of heat from the battery cell 110 to the adjacent battery cell 110 when an issue such as thermal runaway occurs in the battery module 100, and may also perform a role to absorb the expansion of the battery cell 110 and control the expansion.

The area of the flame retardant pad 160 is formed to be equal to or larger than the area of the electrode assembly (not shown) included in the battery cell 110. If the area of the flame retardant pad 160 is formed smaller than the area of the electrode assembly, a uniform pressure it not made to act on the battery cell 110, which may cause problems such as performance degradation. In particular, when swelling of the battery cell 110 occurs in the battery module 100, the flame retardant pad 160 can perform a role to absorb the swelling, however, if the area thereof is smaller than that of the electrode assembly, this makes it impossible to absorb the swelling that occurs in a part where the flame retardant pad 160 is not formed.

The flame retardant pad 160 can be formed as a silicone foam pad so as to prevent the transfer of heat and flames generated in the battery cell 110. The silicone foam pad is a foaming pad with pores formed inside, and has high thermal and chemical stability as well as excellent flame retardancy and heat insulation properties. In particular, it is possible to ensure more excellent flame retardancy properties by applying a silicone foaming pad made of thermosetting foam silicone.

As described above, the module frame 130 according to this embodiment includes a first module frame 131 and a second module frame 132. The specific structures of the first module frame 131 and the second module frame 132 are described in detail below.

According to an embodiment of the present disclosure, the first module frame 131 comprises: a first main part 131a corresponding to one side surface of the battery cell stack 120; a first upper part 131b extending along the direction in which the battery cells 110 are stacked from the upper side surface of the first main part 131a; and a first lower part 131c extending along the direction in which the battery cells 110 are stacked at the lower side of the first main part 131a.

According to an embodiment of the present disclosure, the second module frame 132 comprises: a second main part 132a corresponding to another side surface of the battery cell stack 120; a second upper part 132b extending along the direction in which the battery cells 110 are stacked at the upper side of the second main part 132a; and a second lower part 132c extending along the direction in which the battery cells 110 are stacked at the lower side of the second main part 132a.

The first upper part 131b and the first lower part 131c may extend vertically from the first main part 131a. The second upper part 132b and the second lower part 132c may extend vertically from the second main part 132a. Further, the direction in which the first upper part 131b and the first lower part 131c extend from the first main part 131a and the direction in which the second upper part 132b and the second lower part 132c extend from the second main part 132a may be opposite to each other. In one embodiment, the direction in which the first upper part 131b and the first lower part 131c extend from the first main part 131a may be the X-axis direction, and the direction in which the second upper part 132b and the second lower part 132c extend from the second main part 132a may be the -X-axis direction.

The first module frame 131 and the second module frame 132 are coupled to each other, so that the battery cell stack 120 may be surrounded by the first module frame 131 and the second module frame 132.

According to an embodiment of the present disclosure, the first upper part 131b and the first lower part 131c are formed with a first sawtooth part 131d having a sawtooth shape, and the second upper part 132b and the second lower part 132c are formed with a second sawtooth part 132d having a sawtooth shape.

The sawtooth shape is described in detail below.

According to an embodiment of the present disclosure, one surface of the first main part 131a and one surface of the second main part 132a are located so as to be in parallel with one surface of the battery cells 110. Further, on the basis of the battery cell stack 120, the first main part 131a and the second main part 132a can be located on opposite sides to each other. Thereby, the surface-pressing of the battery cells 110 described later can be performed evenly without deviation.

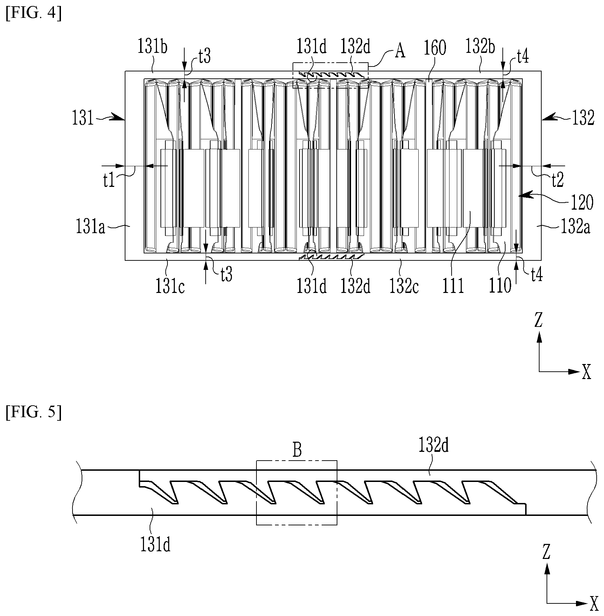

FIG. 4 is a plan view showing a state in which the module frame of FIG. 3 is combined.

According to FIG. 4, the main part according to an embodiment of the present disclosure may perform surface-pressing of the battery cells 110.

That is, when the direction in which the battery cells are stacked (the X-axis direction of FIG. 4) is defined as a longitudinal direction, the dimension of the module frame 130 in the longitudinal direction can be designed to be smaller than the dimension of the battery cell stack 120 in the longitudinal direction so as to achieve the surface-pressing of battery cells 110.

In particular, when the battery cell 110 according to this embodiment is an all-solid-state battery cell or a lithium-sulfur battery cell, the battery cell 110 can operate normally in a state of pressing the surface of the battery cell 110, and the speed at which the life of the battery cell 110 degrades may be slowed down. Therefore, the first main part 131a and the second main part 132a perform the surface-pressing of the battery cells 110, thereby capable of improving the performance of the battery cells 110 and preventing degradation of the life of the battery cells 110.

FIG. 5 is a partially enlarged diagram showing a portion "A" of FIG. 4.

According to FIG. 5, the first sawtooth part 131d and the second sawtooth part 132d according to an embodiment of the present disclosure may be meshed with each other.

The surface-pressing force required by the battery cell 110 can be realized through the meshing between the first sawtooth part 131d and the second sawtooth part 132d. During repeated charging and discharging of the battery cells 110, the battery cells 110 repeatedly expand and contract along the direction in which the battery cells 110 are stacked. The first module frame 131 and the second module frame 132, which are firmly coupled through the sawtooth coupling, can sufficiently apply a desired surface-pressing force to the battery cells 110 that repeat the expansion and contraction. Additionally, since the surface-pressing force of a fixed level or more is secured over the life of the battery cell 110 by the sawtooth coupling, it is possible to maintain the improved performance of the battery cell 110 and prevent degradation of the life of the battery cell 110.

According to an embodiment of the present disclosure, the first module frame 131 and the second module frame 132 can be restrained from moving in the direction in which the battery cells 110 are stacked.

That is, the sawtooth of the first sawtooth part 131d and the sawtooth of the second sawtooth part 132d are engaged and coupled with each other, so that the movement of the module frames 130 in the X-axis direction and the -X-axis direction of FIG. 5 can be restricted. Thereby, it is possible to ensure the rigidity of the module frame 130 and its durability in situations such as vibration or impact, while ensuring the surface-pressing force required by the battery cell 110.

Further, according to an embodiment of the present disclosure, the first module frame 131 and the second module frame 132 can be restrained from moving in the up-and-down direction, which is a direction between the first upper part 131b and the first lower part 131c or a direction between the second upper part 132b and the second lower part 132c.

That is, the sawtooth of the first sawtooth part 131d and the sawtooth of the second sawtooth part 132d are engaged and coupled with each other, so that the movement of the module frames 130 in the Z-axis direction and the -Z-axis direction of FIG. 5 can be restricted. Thereby, it is possible to ensure the rigidity of the module frame 130 and its durability in situations such as vibration or impact while ensuring the surface-pressing force required by the battery cell 110.

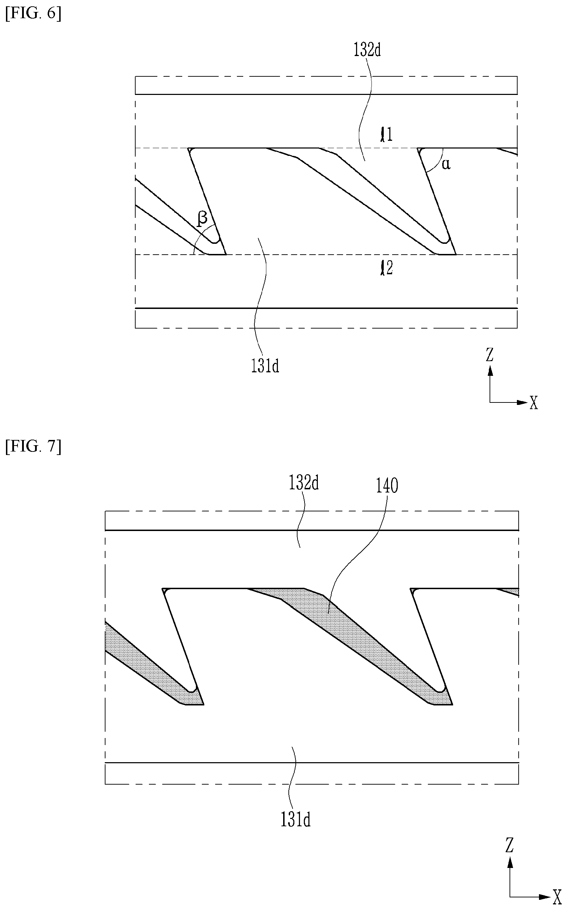

FIG. 6 is a partially enlarged diagram showing a portion "B" of FIG. 5.

According to FIGS. 4 to 6, the first sawtooth part 131d according to another embodiment of the present disclosure may be protruded so that an angle formed between the first sawtooth part 131d and an imaginary horizontal lin7e ℓ2 parallel to the first upper part 131b or the first lower part 131c is an acute angle in a direction opposite to the direction in which the first upper part 131b or the first lower part 131c extends from the first main part 131a. Further, the second sawtooth part 132d may be protruded so that an angle formed between the second sawtooth part 132d and an imaginary horizontal line ℓ1 parallel to the second upper part 132b or the second lower part 132c is an acute angle in a direction opposite to the direction in which the second upper part 132b or the second lower part 132c extends from the second main part 132a.

In particular, since the sawtooth of the first sawtooth part 131d and the sawtooth of the second sawtooth part 132d have a structure in which they are inserted meshing with each other, so that the sawtooth of the first sawtooth part 131d and the sawtooth of the second sawtooth part 132d are coupled with each other, thereby making it possible to restrain movement of the module frames 130 in the X-axis and Z-axis directions of FIG. 5.

Additionally, since the sawtooth of the first sawtooth part 131d and the sawtooth of the second sawtooth part 132d come into contact with surfaces corresponding to each other, the movement in the X-axis and Z-axis of FIG. 5 can be further restrained due to surface friction force.

Thus, as described above, it is possible to ensure the rigidity of the module frame 130 and its durability in situations such as vibration and impact while ensuring the surface-pressing force required by the battery cell 110.

According to an embodiment of the present disclosure, an acute angle formed by the first sawtooth part 131d and an acute angle formed by the second sawtooth part 132d may be 45 degrees or more and 85 degrees or less.

Thus, the sawtooth of the first sawtooth part 131d and the sawtooth of the second sawtooth part 132d have a structure in which they are inserted meshing with each other, which makes it possible to restrain movement in the X-axis and Z-axis directions of FIG. 6.

Further, the acute angle β formed by the first sawtooth part 131d and the acute angle α formed by the second sawtooth part 132d are 45 degrees or more and 85 degrees or less, which facilitates the coupling between the first sawtooth part 131d and the second sawtooth part 132d and prevents damage to the sawtooth during the coupling between the first sawtooth part 131d and the second sawtooth part 132d.

More specifically, according to an embodiment of the present disclosure, the acute angle formed by the first sawtooth part 131d and the acute angle formed by the second sawtooth part 132d may be 55 degrees or more and 80 degrees or less. If the acute angle β formed by the first sawtooth part 131d and the acute angle α formed by the second sawtooth part 132d are less than 55 degrees, the first sawtooth part 131d and the second sawtooth part 132d are formed too steeply, the meshing itself between the first sawtooth part 131d and the second sawtooth part 132d may become difficult, which results in deterioration of assembly property. Furthermore, there is a high possibility that damage may occur during the process of coupling the first sawtooth part 131d and the second sawtooth part 132d. Additionally, if the acute angle β formed by the first sawtooth part 131d and the acute angle α formed by the second sawtooth part 132d are more than 80 degrees, it may be difficult to secure the surface-pressing force of a fixed level or more required for the battery cell 110. If the surface-pressing force of a fixed level or more is not ensured for the battery cell, there may be a problem that the performance of the battery cell 110 is eventually deteriorated, and the life of the battery cell 110 is degraded.

FIG. 7 is a partial diagram showing a module frame according to another embodiment of the present disclosure.

According to the embodiment of FIG. 7, the first sawtooth part 131d and the second sawtooth part 132d according to an embodiment of the present disclosure may be coated with an adhesive.

The adhesive may fill an empty space of the first sawtooth part 131d and the second sawtooth part 132d. Therefore, the adhesive may improve the coupling strength of a coupling portion between the first module frame 131 and the second module frame 132, and may enhance the durability of the battery module 100 in situations such as vibration or impact.

Referring to FIGS. 2 and 7 together, the adhesive can restrain the movement of the first module frame 131 and the second module frame 132 in the direction in which the electrode lead 111 protrudes. That is, due to the application of the adhesive, the first module frame 131 and the second module frame 132 can be restrained from moving in the Y-axis direction and the -Y-axis direction, which are coupled by the sawtooth coupling.

Meanwhile, referring again to FIGS. 3 and 4, the thickness t1 of the first main part 131a according to an embodiment of the present disclosure may be larger than the thickness t3 of the first upper part 131b and the thickness t3 of the first lower part 131c, and the thickness t2 of the second main part 132a may be larger than the thickness t4 of the second upper part 132b and the thickness t4 of the second lower part 132c.

In the case of the battery module 100, due to continuous charging/discharging of the battery cells 110, a swelling phenomenon may occur in which the battery cell 110 swells up in the surface direction of the battery cell 110, i.e., in the X-axis direction and the -X-axis direction, which are the directions in which the battery cells 110 are stacked. As the battery cells 110 swell up, the first main part 131a and the second main part 132a corresponding to one side direction of the battery cell stack 120 may receive pressure due to swelling. At this time, the module frame 130 must withstand the swelling pressure.

In order to effectively control the swelling phenomenon of the battery cell 110, the thicknesses t1, t2 of the first main part 131a and the second main part 132a may be larger than the thicknesses t3, t4 of the first upper part 131b, the first lower part 131c, the second upper part 132b, and the second lower part 132c.

Thus, even if the swelling phenomenon of the battery cell 110 occurs, the first main part 131a and the second main part 132a can firmly support the battery cell stack 120, and also the length of the module frame 130 in the direction in which the battery cell 110 is stacked can be maintained corresponding to one side direction of the battery cell stack 120, and thus the length of the battery module 100 corresponding thereto can also be maintained.

According to an embodiment of the present disclosure, the thicknesses t1, t2 of the first main part 131a and the second main part 132a may be 1.5 mm or more and 30.0 mm or less.

Thus, even if a swelling phenomenon of the battery cell 110 occurs, the swelling phenomenon of the battery cell 110 can be effectively controlled by ensuring the minimum thickness of the first main part 131a and the second main part 132a.

According to an embodiment of the present disclosure, the thicknesses t3, t4 of the first upper part 131b, the first lower part 131c, the second upper part 132b, and the second lower part 132c may be 1.5 mm or more and 6.0 mm or less.

Thus, it is possible to ensure the rigidity of the first upper part 131b, the first lower part 131c, the second upper part 132b, and the second lower part 132c, and stably achieve the meshing between the first sawtooth part 131d and the second sawtooth part 132d.

According to an embodiment of the present disclosure, the thickness t1 of the first main part 131a or the thickness t2 of the second main part 132a may be not less than 1 time and not more than 5 times the thickness t3 of the first upper part 131b, the thickness t3 of the first lower part 131c, the thickness t4 of the second upper part 132b, or the thickness t4 of the second lower part 132c.

If the thickness t1 of the first main part 131a or the thickness t2 of the second main part 132a is less than 1 time the thickness t3 of the first upper part 131b, the thickness t3 of the first lower part 131c, the thickness t4 of the second upper part 132b, or the thickness t4 of the second lower part 132c, it is difficult for the first main part 131a and the second main part 132a to firmly support the battery cell stack 120 when the battery cell 110 swells, and thus the length of the module frame 130 in the direction in which the battery cells 110 are stacked cannot be maintained.

In the case where the thickness t1 of the first main part 131a or the thickness t2 of the second main part 132a is designed under the above conditions, even if swelling of the battery cell 110 occurs, the length of the first main part 131a and the second main part 132a in the direction in which the battery cell 110 of the module frame 130 is stacked can be maintained corresponding to one side direction of the battery cell stack 120. Therefore, the length of the battery module 100 corresponding thereto can also be maintained, so that the swelling phenomenon of the battery cell 110 can be effectively controlled.

On the other hand, if the thickness t1 of the first main part 131a or the thickness t2 of the second main part 132a is more than five times the thickness t3 of the first upper part 131b, the thickness t3 of the first lower part 131c, the thickness t4 of the second upper part 132b or the thickness t4 of the second lower part, the first main part 131a and the second main part 132a may be excessively thick, which may rather unnecessarily increase the weight and volume of the battery module. In addition, it may be difficult to manufacture the first module frame 131 and the second module frame 132 having the corresponding thickness difference.

According to certain other aspects of the present disclosure, a battery pack including the battery module 100 is provided.

One or more battery modules 100 according to an embodiment of the present disclosure described above may be mounted together with various control and protection systems such as a battery management system (BMS), a battery disconnect unit (BDU), and a cooling system, to form a battery pack.

The battery modules 100 or the battery pack may be applied to various devices, which include, for example, transportation vehicles such as electric bicycles, electric vehicles, and hybrids. However, without being limited thereto, the battery modules or the battery pack may be applied to various devices using secondary batteries.

In the embodiments above, expressions indicating directions such as "front," "rear," "left," "right," "up," and "down" have been used. These expressions are used only to facilitate the description, and may vary, for example, depending on the location of a target object or an observer.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery module
120: battery cell stack
130: module frame
131: first module frame
131a: first main part
131b: first upper part
131c: first lower part
131d: first sawtooth part
132: second module frame
132a: second main part
132b: second upper part
132c: second lower part
132d: second sawtooth part
140: adhesive

## Claims

1. A battery module comprising:
a battery cell stack in which a plurality of battery cells including electrode leads are stacked; and
a module frame in which the battery cell stack is housed,
wherein the module frame comprises,
a first module frame; and
a second module frame,
wherein the first module frame comprises,
a first main part corresponding to one side surface of the battery cell stack;
a first upper part extending along a direction in which the battery cells are stacked at an upper side of the first main part; and
a first lower part extending along the direction in which the battery cells are stacked at a lower side of the first main part,
wherein the second module frame comprises,
a second main part corresponding to the other side surface of the battery cell stack;
a second upper part extending along the direction in which the battery cells are stacked at an upper side of the second main part; and
a second lower part extending along the direction in which the battery cells are stacked at a lower side of the second main part,
wherein the first upper part and the first lower part are formed with a first sawtooth part having a sawtooth shape, and
wherein the second upper part and the second lower part are formed with a second sawtooth part having a sawtooth shape.

2. The battery module according to claim 1,
wherein one surface of the first main part and one surface of the second main part are located so as to be in parallel with one surface of the battery cells.

3. The battery module according to claim 1,
wherein the main part performs surface-pressing of the battery cells.

4. The battery module according to claim 1,
wherein the first sawtooth part and the second sawtooth part are meshed with each other.

5. The battery module according to claim 1,
wherein the first module frame and the second module frame are restrained from moving in the direction in which the battery cells are stacked.

6. The battery module according to claim 1,
wherein the first module frame and the second module frame are restrained from moving in the up-and-down direction, which is a direction between the first upper part and the first lower part or a direction between the second upper part and the second lower part.

7. The battery module according to claim 1,
wherein the first sawtooth part is protruded so that an angle formed between the first sawtooth part and an imaginary horizontal line parallel to the first upper part or the first lower part is an acute angle in a direction opposite to a direction in which the first upper part or the first lower part extends from the first main part, and
the second sawtooth part is protruded so that an angle formed between the second sawtooth part and an imaginary horizontal line parallel to the second upper part or the second lower part is an acute angle in a direction opposite to a direction in which the second upper part or the second lower part extends from the second main part.

8. The battery module according to claim 7,
wherein the acute angle formed by the first sawtooth part and the acute angle formed by the second sawtooth part are 45 degrees or more and 85 degrees or less.

9. The battery module according to claim 7,
wherein the acute angle formed by the first sawtooth part and the acute angle formed by the second sawtooth part are 55 degrees or more and 80 degrees or less.

10. The battery module according to claim 1,
wherein the first sawtooth part and the second sawtooth part are coated with an adhesive.

11. The battery module according to claim 10,
wherein the first module frame and the second module frame are restrained by the adhesive from moving in a direction in which the electrode leads protrude.

12. The battery module according to claim 1,
wherein a thickness of the first main part is larger than a thickness of the first upper part and a thickness of the first lower part, and
a thickness of the second main part is larger than a thickness of the second upper part and a thickness of the second lower part.

13. The battery module according to claim 1,
wherein a thickness of the first main part and the second main part is 1.5 mm or more and 30.0 mm or less.

14. The battery module according to claim 1,
wherein a thickness of the first upper part, the first lower part, the second upper part and the second lower part is 1.5 mm or more and 6.0 mm or less.

15. The battery module according to claim 1,
wherein a thickness of the first main part or a thickness of the second main part is not less than 1 time and not more than 5 times a thickness of the first upper part, a thickness of the first lower part, a thickness of the second upper part or a thickness of the second lower part.

16. A battery pack comprising a battery module according to claim 1.
